# EUROPÄISCHE PATENTSCHRIFT

(11) **EP 2 149 484 B1**
(45) Veröffentlichungstag und Bekanntmachung des Hinweises auf die Patenterteilung: **13.07.2016**
(21) Anmeldenummer: 09006427.0
(22) Anmeldetag: 13.05.2009
(51) Int. Cl.: B60R 25/10, B60R 25/102, B60R 25/33

(54) **Verfahren zum Betreiben einer Alarmzentrale eines VTS-Systems**
Method for operating an alarm central of a VTS system
Procédé de fonctionnement d'une centrale d'alarme d'un système VTS

(30) Priorität: 02.08.2008 DE 102008036171
(43) Veröffentlichungstag der Anmeldung: 03.02.2010
(73) Patentinhaber: Dr. Ing. h.c. F. Porsche AG, 70435 Stuttgart (DE)
(72) Erfinder: Wanzeck, Michael, 76877 Offenbach/Queich (DE)

(56) Entgegenhaltungen:
- WO-A-01/60032
- US-A1- 2004 093 291
- US-A1- 2005 027 438
- US-A1- 2006 082 471

## Beschreibung

Die Erfindung betrifft ein Verfahren zum Betreiben einer Alarmzentrale eines VTS-Systems nach dem Oberbegriff des Patentanspruchs 1.

Aus der Praxis ist es bereits bekannt, mit einem sogenannten Vehicle Tracking System (VTS) Fahrzeuge zu orten bzw. zu verfolgen, insbesondere dann, wenn von einer kraftfahrzeuginternen VTS-Einrichtung an eine Alarmzentrale eine Alarmmeldung übermittelt wird. So ist es aus der DE 10 2004 047 809 B4 bereits bekannt, dass ein kraftfahrzeuginternes Diebstahlsicherungssystem eines Kraftfahrzeugs eine Alarmmeldung generiert und an kraftfahrzeugexterne Einrichtungen übermittelt.

Aus der US 2006/0082471 ist ein Vehicle Tracking System bekannt, wobei nach der Erkennung eine Liste mit Fahrzeugen erstellt wird, die von einer zentralen Stelle verfolgt werden.

Weitere Vehicle Tracking Systems werden in US2005/027438, WO01/60032, US20040093291 beschrieben.

Die Bearbeitung von in der Alarmzentrale eingehenden Alarmmeldungen ist stark vom zuständigen Bearbeiter abhängig. Teilweise werden Alarmmeldungen stark verspätet oder überhaupt nicht bearbeitet, oder der zuständige Bearbeiter reagiert falsch. Bislang ist es nicht möglich, die Bearbeitung von in der Alarmzentrale eingehenden Alarmmeldungen zu überwachen und auf eine stark verspätete Bearbeitung oder eine Nichtbearbeitung zu reagieren.

Hiervon ausgehend liegt der vorliegenden Erfindung das Problem zu Grunde ein neuartiges Verfahren zum Betreiben einer Alarmzentrale eines VTS-Systems zu schaffen.

Dieses Problem wird durch ein Verfahren gemäß Patentanspruch 1 gelöst.

Erfindungsgemäß wird dann, wenn in der Alarmzentrale eine Alarmmeldung einer VTS-Einrichtung eingeht, automatisch eine Zeitüberwachung gestartet, die überprüft, ob und in welcher Zeitspanne nach Initiierung der Bearbeitung der Alarmmeldung die Bearbeitung tatsächlich begonnen wird, wobei dann, wenn hierbei festgestellt wird, dass eine definierte erste Zeitspanne überschritten wird, ein Eskalationsfunktion ausgelöst wird.

Mit dem erfindungsgemäßen Verfahren ist es möglich, die Bearbeitung von in einer Alarmzentrale eines VTS-Systems eingehenden Alarmmeldungen zu überprüfen und so eine zeitnahe Bearbeitung derselben zu garantieren.

Vorzugsweise überprüft die Zeitüberwachung weiterhin automatisch, ob und in welcher Zeitspanne die Alarmmeldung mit dem Halter des betroffenen Kraftfahrzeugs bestätigt wird, wobei dann, wenn hierbei festgestellt wird, dass eine definierte zweite Zeitspanne überschritten wird, eine Eskalationsfunktion ausgelöst wird.

Nach einer vorteilhaften Weiterbildung der Erfindung überprüft die Zeitüberwachung weiterhin automatisch, ob und in welcher Zeitspanne die bestätigte Alarmmeldung an Sicherheitsorgane übermittelt wird, wobei dann, wenn hierbei festgestellt wird, dass eine definierte dritte Zeitspanne überschritten wird, eine Eskalationsfunktion ausgelöst wird.

Vorzugsweise wird bei Auslösung einer Eskalationsfunktion automatisch eine Meldung für einen Vorgesetzten des zuständigen Bearbeiters ausgelöst, wobei überwacht wird, ob und in welcher Zeitspanne nach Auslösung dieser Meldung die ausstehende Aktion erledigt wird, wobei dann, wenn hierbei festgestellt wird, dass eine definierte vierte Zeitspanne überschritten wird, eine Meldung für eine der Alarmzentrale übergeordnete Zentrale ausgelöst wird.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein Signalflussdiagramm zur Verdeutlichung des erfindungsgemäßen Verfahrens zum Betreiben einer Alarmzentrale eines VTS-Systems;
- Fig. 2: ein weiteres Signalflussdiagramm zur Verdeutlichung des erfindungsgemäßen Verfahrens.

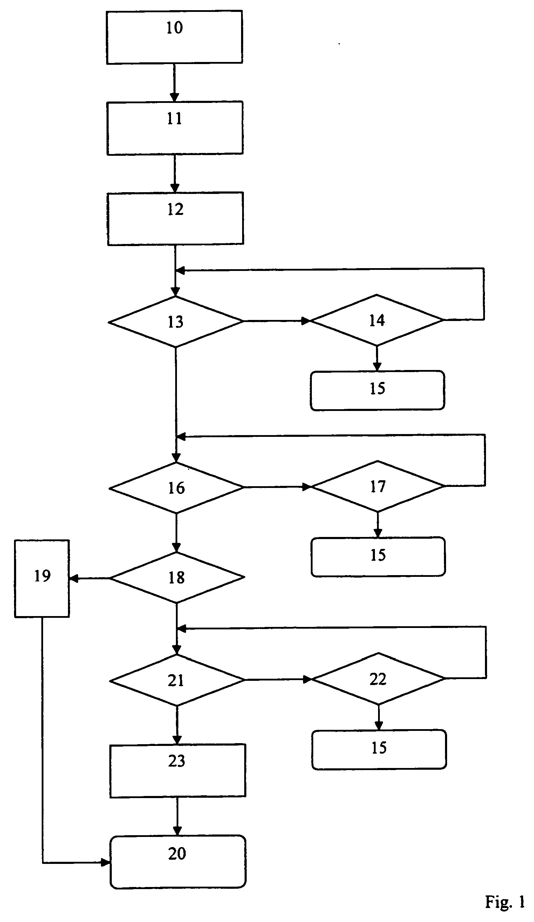

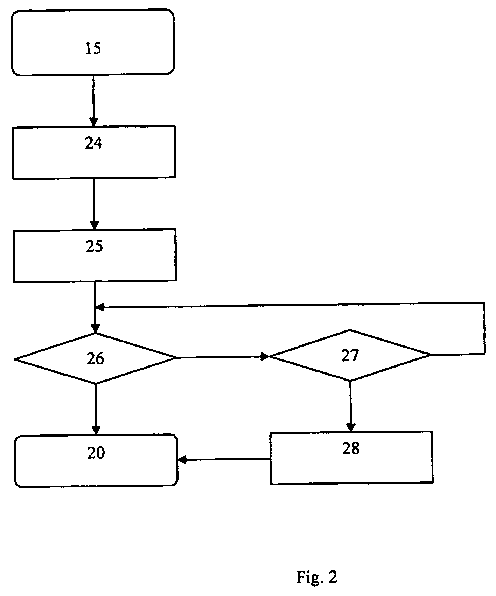

Die hier vorliegende Erfindung betrifft ein Verfahren zum Betreiben einer Alarmzentrale eines VTS-Systems (Vehikel Tracking Systems), wobei das erfindungsgemäße Verfahren nachfolgend unter Bezugnahme auf Fig. 1 und 2 im Detail beschrieben wird.

Gemäß einem Block 10 des Signalflussdiagramms der Fig. 1 wird in einer kraftfahrzeuginternen VTS-Einrichtung eines Kraftfahrzeugs eine Alarmmeldung ausgelöst, wobei die kraftfahrzeuginterne VTS-Einrichtung die Alarmmeldung an eine kraftfahrzeugexterne Alarmzentrale übermittelt.

Block 11 visualisiert den Eingang der Alarmmeldung in der Alarmzentrale eines VTS-Systems, wobei dann, wenn in der Alarmzentrale gemäß Schritt 11 eine Alarmmeldung einer kraftfahrzeuginternen VTS-Einrichtung eingeht, gemäß dem Block 12 automatisch die Bearbeitung der Alarmmeldung initiiert und automatisch eine Zeitüberwachung gestartet wird.

Gemäß Block 13 wird automatisch überprüft, ob eine initiierte Bearbeitung der Alarmmeldung tatsächlich begonnen wird. Falls in Block 13 festgestellt wird, dass eine Bearbeitung einer Alarmmeldung noch nicht begonnen wurde, wird automatisch auf Block 14 verzweigt, wobei in Block 14 automatisch überprüft wird, ob eine definierte erste Zeitspanne überschritten ist. Wird in Block 14 festgestellt, dass die definierte erste Zeitspanne noch nicht überschritten ist, so wird auf Block 13 zurück verzweigt. Wird hingegen in Block 14 festgestellt, dass die erste definierte Zeitspanne, in welcher nach Initiierung der Bearbeitung eine Alarmmeldung die Bearbeitung derselben tatsächlich aufgenommen werden muss, überschritten ist, so wird ausgehend von Block 14 auf Block 15 verzweigt und automatisch eine Eskalationsfunktion ausgelöst.

Wird in Block 13 hingegen festgestellt, dass mit einer Bearbeitung der Alarmmeldung tatsächlich begonnen wurde, so wird ausgehend von Block 13 automatisch auf Block 16 verzweigt, wobei in Block 16 automatisch überprüft wird, ob die Alarmmeldung mit dem Halter des betroffenen Kraftfahrzeugs bestätigt wurde. Wird in Block 16 festgestellt, dass die Alarmmeldung mit dem Halter noch nicht bestätigt wurde, so wird ausgehend von Block 16 auf Block 17 verzweigt, wobei in Block 17 automatisch überprüft wird, ob eine definierte zweite Zeitspanne überschritten wurde. Ist dies nicht der Fall, so wird ausgehend von Block 17 auf Block 16 zurück verzweigt. Ist dies hingegen der Fall, wurde also die definierte zweite Zeitspanne überschritten, so wird ausgehend von Block 17 auf Block 15 verzweigt, und automatisch die Eskalationsfunktion ausgelöst.

Die zweite Zeitspanne läuft vorzugsweise ab Initiierung der Bearbeitung der Alarmmeldung in Block 12. In diesem Fall wird demnach in Block 16 automatisch überprüft, in welcher Zeitspanne die Alarmmeldung mit dem Halter des betroffenen Kraftfahrzeugs nach Initiierung der Bearbeitung bestätigt wird.

Im Unterschied hierzu ist es auch möglich, in Block 16 zu überprüfen, in welcher Zeitspanne die Alarmmeldung mit dem Halter des betroffenen Kraftfahrzeugs nach tatsächlichem Beginn der Bearbeitung der Alarmmeldung bestätigt wird.

Dann, wenn in Block 16 festgestellt wird, dass die Alarmmeldung mit dem Halter des betroffenen Kraftfahrzeugs bestätigt wurde, wird auf Block 18 verzweigt, wobei in Block 18 überprüft wird, ob eine gültige Alarmmeldung vorliegt, wobei eine gültige Alarmmeldung nur dann vorliegt, wenn dieselbe vom Halter des Kraftfahrzeugs bestätigt wird.

Liegt keine gültige Alarmmeldung vor, so wird ausgehend von Block 18 auf Block 19 verzweigt, wobei in Block 19 die Bearbeitung der Alarmmeldung protokolliert wird und anschließend auf Block 20 verzweigt wird, in welchem das erfindungsgemäße Verfahren beendet wird. Wird hingegen in Block 18 festgestellt, dass eine gültige Alarmmeldung vorliegt, so wird ausgehend von Block 18 auf Block 21 verzweigt, wobei in Block 21 automatisch überprüft wird, ob die bestätigte Alarmmeldung an Sicherheitsorgane übermittelt wurde.

Dann, wenn in Block 21 festgestellt wurde, dass die bestätigte Alarmmeldung nicht an Sicherheitsorgane übermittelt wurde, wird ausgehend von Block 21 auf Block 22 verzweigt, wobei in Block 22 automatisch überprüft wird, ob eine definierte dritte Zeitspanne überschritten wurde. Ist dies nicht der Fall, so wird ausgehend von Block 22 auf Block 21 zurück verzweigt. Ist es hingegen der Fall, wurde demnach die definierte dritte Zeitspanne überschritten, so wird ausgehend von Block 22 auf Block 15 verzweigt und die Eskalationsfunktion ausgelöst.

In Block 21 wird vorzugsweise überprüft, in welcher Zeitspanne die bestätigte Alarmmeldung nach Initiierung der Bearbeitung der Alarmmeldung in Block 12 an Sicherheitsorgane übermittelt wurde.

Im Unterschied hierzu kann in Block 21 auch überprüft werden, in welcher Zeitspanne die mit dem Halter bestätigte Alarmmeldung an Sicherheitsorgane nach Bestätigung derselben durch den Halter des Kraftfahrzeugs übermittelt wurde.

Dann, wenn in Block 21 festgestellt wird, dass die vom Halter bestätigte Alarmmeldung an Sicherheitsorgane übermittelt wurde, wird automatisch auf Block 23 verzweigt, wobei in Block 23 die Bearbeitung der Alarmmeldung in der Alarmzentrale protokolliert wird und sodann zur Beendigung des Verfahrens auf Block 12 verzweigt wird.

Fig. 2 visualisiert die Struktur der Eskalationsfunktion anhand eines weiteren Signalflussdiagramms, wobei Block 15 die automatisch Auslösung der Eskalationsfunktion visualisiert.

Mit Auslösung der Eskalationsfunktion gemäß Block 15 wird im Signalflussdiagramm der Fig. 2 in einem Block 24 eine automatisch weitere Zeitüberwachung gestartet und in einem Block 25 automatisch eine Meldung für einen Vorgesetzten des zuständigen Bearbeiters ausgelöst. In einem Block 26 wird sodann automatisch überwacht, ob nach Auslösung der Meldung für den Vorgesetzten die ausstehende Aktion, nämlich entweder der ausstehende Beginn einer initiierten Bearbeitung oder die ausstehende Bestätigung der Alarmmeldung mit dem Halter oder die ausstehende Übermittlung einer bestätigten Alarmmeldung an Sicherheitsorgane, ausgeführt wurde.

Wird in Block 26 festgestellt, dass diese Aktion noch nicht ausgeführt wurde, so wird ausgehend von Block 26 auf Block 27 verzweigt, wobei in Block 27 automatisch überprüft wird, ob eine definierte Zeitspanne überschritten wurde. Ist dies nicht der Fall, so wird ausgehend von Block 27 auf Block 26 zurück verzweigt. Ist dies hingegen der Fall, wird also in Block 27 festgestellt, dass die definierte vierte Zeitspanne überschritten wurde, so wird ausgehend von Block 27 auf Block 28 verzweigt, wobei in Block 28 eine Meldung für eine der Alarmzentrale übergeordnete Zentrale automatisch ausgelöst wird, so z. B. eine Alarmmeldung für eine Hotline des Kraftfahrzeugherstellers. Die definierte vierte Zeitspanne, die in Schritt 27 überwacht wird, beginnt mit der Auslösung der Zeitüberwachung in Block 24 zu laufen.

Wird in Block 26 festgestellt, dass die ausstehende Funktion erledigt wurde, so wird auf Block 20 verzweigt, wobei Block 20 die Beendigung des Verfahrens visualisiert. Ausgehend von Block 28 wird ebenfalls auf Block 20 verzweigt.

Mit dem erfindungsgemäßen Verfahren ist es möglich, die ordnungsgemäße Bearbeitung von Alarmmeldungen, die von kraftfahrzeuginternen VTS-Einrichtungen an eine kraftfahrzeugexterne Alarmzentrale eines VTS-Systems übermittelt werden, automatisch zu überwachen, und dann, wenn eine nicht ordnungsgemäße Bearbeitung festgestellt wird, automatisch Eskalationsfunktionen auszulösen.

## Patentansprüche

1. Verfahren zum Betreiben einer Alarmzentrale eines Vehicle Tracking Systems (VTS), wobei dann, wenn in der kraftfahrzeugexternen Alarmzentrale eine Alarmmeldung einer kraftfahrzeuginternen VTS-Einrichtung eingeht, automatisch eine Bearbeitung der Alarmmeldung initiiert wird, **dadurch gekennzeichnet, dass** dann, wenn in der Alarmzentrale eine Alarmmeldung einer VTS-Einrichtung eingeht, automatisch eine Zeitüberwachung gestartet wird, die überprüft, ob und in welcher Zeitspanne nach Initiierung der Bearbeitung der Alarmmeldung die Bearbeitung tatsächlich begonnen wird, wobei dann, wenn hierbei festgestellt wird, dass eine definierte erste Zeitspanne überschritten wird, automatisch eine Eskalationsfunktion ausgelöst wird, wobei bei Auslösung einer Eskalatlonsfunktion automatisch eine Meldung für einen Vorgesetzten des zuständigen Bearbeiters ausgelöst wird, wobei überwacht wird, ob und in welcher Zeitspanne nach Auslösung dieser Meldung die ausstehende Aktion erledigt wird, wobei dann, wenn hierbei festgestellt wird, dass eine definierte vierte Zeitspanne überschritten wird, automatisch eine Meldung für eine der Alarmzentrale übergeordnete Zentrale ausgelöst wird.

2. Verfahren nach Anspruch 1, **dadurch gekennzeichnet, dass** die Zeltüberwachung weiterhin automatisch überprüft, ob und in welcher Zeitspanne die Alarmmeldung mit dem Halter des betroffenen Kraftfahrzeugs bestätigt wird, wobei dann, wenn hierbei festgestellt wird, dass eine definierte zweite Zeitspanne überschritten wird, automatisch eine Eskalationsfunktion ausgelöst wird.

3. Verfahren nach Anspruch 2, **dadurch gekennzeichnet, dass** überprüft wird, in welcher Zeitspanne die Alarmmeldung mit dem Halter des betroffenen Kraftfahrzeugs nach Initiierung der Bearbeitung bestätigt wird,

4. Verfahren nach Anspruch 2, **dadurch gekennzeichnet, dass** überprüft wird, in welcher Zeitspanne die Alarmmeldung mit dem Halter des betroffenen Kraftfahrzeugs nach tatsächlichem Beginn der Bearbeitung bestätigt wird.

5. Verfahren nach einem der Ansprüche 1 bis 4, **dadurch gekennzeichnet, dass** die Zeitüberwachung weiterhin automatisch überprüft, ob und in welcher Zeitspanne die bestätigte Alarmmeldung an Sicherheitsorgane übermittelt wird, wobei dann, wenn hierbei festgestellt wird, dass eine definierte dritte Zeitspanne überschritten wird, automatisch eine Eskalationsfunktion ausgelöst wird.

6. Verfahren nach Anspruch 4, **dadurch gekennzeichnet, dass** überprüft wird, in welcher Zeitspanne die Alarmmeldung an Sicherheitsorgane nach Initiierung der Bearbeitung übermittelt wird.

7. Verfahren nach Anspruch 4, **dadurch gekennzeichnet, dass** überprüft wird, in welcher Zeitspanne die Alarmmeldung an Sicherheitsorgane nach Bestätigung derselben durch den Halter des Kraftfahrzeugs übermittelt wird,

## Claims

1. Method for operating an alarm control centre of a vehicle tracking system (VTS), wherein, when an alarm message from a VTS device inside the motor vehicle is received in the alarm control centre outside the motor vehicle, processing of the alarm message is automatically initiated, **characterized in that**, when an alarm message from a VTS device is received in the alarm control centre, time monitoring is automatically started, which time monitoring checks whether and in what period of time after initiating the processing of the alarm message the processing is actually started, wherein, when it is determined in this case that a defined first period of time is exceeded, an escalation function is automatically initiated, wherein, upon initiating an escalation function, a message for a superior of the relevant processor is automatically initiated, wherein monitoring is carried out in order to determine whether and in what period of time after initiating this message the pending action is carried out, wherein, when it is determined in this case that a defined fourth period of time is exceeded, a message for a control centre superordinate to the alarm control centre is automatically initiated.

2. Method according to Claim 1, **characterized in that** the time monitoring also automatically checks whether and in what period of time the alarm message is confirmed with the owner of the motor vehicle in question, wherein, when it is determined in this case that a defined second period of time is exceeded, an escalation function is automatically initiated.

3. Method according to Claim 2, **characterized in that** a check is carried out in order to determine the period of time in which the alarm message is confirmed with the owner of the motor vehicle in question after initiating the processing.

4. Method according to Claim 2, **characterized in that** a check is carried out in order to determine the period of time in which the alarm message is confirmed with the owner of the motor vehicle in question after the processing has actually been started.

5. Method according to one of Claims 1 to 4, **characterized in that** the time monitoring also automatically checks whether and in what period of time the confirmed alarm message is transmitted to security agencies, wherein, when it is determined in this case that a defined third period of time is exceeded, an escalation function is automatically initiated.

6. Method according to Claim 4, **characterized in that** a check is carried out in order to determine the period of time in which the alarm message is transmitted to security agencies after the processing has been initiated.

7. Method according to Claim 4, **characterized in that** a check is carried out in order to determine the period of time in which the alarm message is transmitted to security agencies after the alarm message has been confirmed by the owner of the motor vehicle.

## Revendications

1. Procédé de conduite d'une centrale d'alarme d'un système de suivi de véhicule ("Vehicle Tracking System" - VTS), dans lequel un traitement du message d'alarme est lancé automatiquement lorsqu'un message d'alarme d'un dispositif VTS d'un véhicule automobile aboutit dans la centrale d'alarme externe au véhicule automobile,
**caractérisé en ce que**
lorsqu'un message d'alarme d'un dispositif VTS aboutit dans la centrale d'alarme, une surveillance du temps est lancée automatiquement et vérifie si le traitement a commencé effectivement et combien de temps après le lancement du traitement du message d'alarme,
**en ce que** s'il est à cette occasion constaté qu'une première durée définie est dépassée, une fonction d'incrémentation est déclenchée automatiquement, un message est envoyé automatiquement à un supérieur du travailleur concerné lorsque la fonction d'incrémentation est déclenchée et on surveille si l'action déclenchée est terminée et combien de temps après le déclenchement de ce message et
**en ce que** s'il est constaté qu'une quatrième durée définie est dépassée, un message est lancé automatiquement à une centrale d'ordre hiérarchique supérieure à la centrale d'alarme.

2. Procédé selon la revendication 1, **caractérisé en ce que** la surveillance du temps vérifie en outre automatiquement si le message d'alarme est confirmé par le détenteur du véhicule automobile concerné et après combien de temps et **en ce qu'**une fonction d'incrémentation est déclenchée automatiquement s'il est constaté à cette occasion qu'une deuxième durée définie est dépassée.

3. Procédé selon la revendication 2, **caractérisé en ce qu'**il vérifie après combien de temps depuis le lancement du traitement le message d'alarme est confirmé par le détenteur du véhicule automobile concerné.

4. Procédé selon la revendication 2, **caractérisé en ce qu'**il vérifie après combien de temps depuis le début effectif du traitement le message d'alarme est confirmé par le détenteur du véhicule automobile concerné.

5. Procédé selon l'une des revendications 1 à 4, **caractérisé en ce que** la surveillance du temps vérifie en outre automatiquement si le message d'alarme activé est transmis à des organes de sécurité et après combien de temps et **en ce que** s'il est constaté à cette occasion qu'une troisième durée définie est dépassée, une fonction d'incrémentation est automatiquement lancée.

6. Procédé selon la revendication 4, **caractérisé en ce qu'**il vérifie après combien de temps depuis le lancement du traitement le message d'alarme est transmis aux organes de sécurité.

7. Procédé selon la revendication 4, **caractérisé en ce qu'**il vérifie après combien de temps depuis la confirmation du message d'alarme ce dernier est transmis aux organes de sécurité par le détenteur du véhicule automobile.
